# EUROPEAN PATENT APPLICATION

(11) **EP 4 832 375 A1**
(43) Date of publication of application: **28.10.2026**
(21) Application number: 24910585.9
(22) Date of filing: 04.12.2024
(51) Int. Cl.: H04B 10/25

(54) **INFORMATION TRANSMISSION METHOD, IP DEVICE, OTN DEVICE, AND COMPUTER READABLE STORAGE MEDIUM**

(30) Priority: 28.12.2023 CN 202311852857
(71) Applicant: ZTE CORPORATION, Shenzhen, Guangdong 518057 (CN)
(72) Inventor: LU, Nan, Shenzhen, Guangdong 518057 (CN)
(74) Representative: Canzler & Bergmeier Patentanwälte Partnerschaft mbB
(86) International application number: PCT/CN2024/136704
(87) International publication number: WO 2025/139653

(57) **Abstract**

The present disclosure provides an information transmission method, used for an Internet Protocol (IP) device. The IP device comprises a colored optical module. The method comprises: determining a first pilot tone signal on the basis of operation administration and maintenance (OAM) information, wherein the first pilot tone signal carries the OAM information; and taking the first pilot tone signal as an optical channel-associated signal in a first colored signal and sending the optical channel-associated signal to an optical transport network (OTN) device. The present disclosure further provides an IP device, an OTN device, and a computer readable storage medium.

## Description

### CROSS REFERENCE TO RELATED APPLICATIONS

The present disclosure claims the priority to Chinese Patent Application No. 202311852857.1 filed on December 28, 2023, the contents of which are incorporated herein by reference in their entirety.

### TECHNICAL FIELD

The present disclosure relates to the technical field of communications, and in particular, to an information transmission method, an Internet Protocol (IP) device, an Optical Transport Network (OTN) device, and a computer readable storage medium.

### BACKGROUND

At present, although colored optical interworking between an optical layer of an IP device and an optical layer of an OTN device can be achieved by loading a colored optical module into the IP device, since the colored optical module typically includes merely one laser and is not provided with an additional communication channel, it is difficult to realize information coordination between the IP device and the OTN device, which may cause the problem that information of the colored optical module cannot be acquired and configured as desired by the OTN device.

### SUMMARY

The present disclosure provides an information transmission method, an IP device, an OTN device, and a computer readable storage medium.

In a first aspect, the present disclosure provides an information transmission method performed by an IP device, the IP device includes a colored optical module, and the method includes: determining a first pilot tone signal based on Operation Administration and Maintenance (OAM) information, the first pilot tone signal carrying the OAM information; sending the first pilot tone signal, as an optical companion signal of a first colored optical signal, to an OTN device.

In a second aspect, the present disclosure provides an information transmission method performed by an OTN device, including: in response to detecting a first pilot tone signal, determining OAM information based on the first pilot tone signal, the first pilot tone signal carrying the OAM information and serving as an optical companion signal of a first colored optical signal.

In a third aspect, the present disclosure provides an IP device, including a colored optical module, the colored optical module includes a laser unit and a first coordination unit; the laser unit includes a first transmitting subunit; the first coordination unit includes at least one first processing subunit, a first storage, and a first receiving subunit; the first storage has stored therein at least one computer program which, when executed by the first transmitting subunit, the at least one first processing subunit, and the first receiving subunit, causes the first transmitting subunit, the at least one first processing subunit, and the first receiving subunit to implement the information transmission method described in the first aspect.

In a fourth aspect, the present disclosure provides an OTN device, including a wavelength division multiplexer/demultiplexer module, the wavelength division multiplexer/demultiplexer module includes a colored light detection unit and a second coordination unit; the colored light detection unit includes a second receiving subunit; the second coordination unit includes at least one second processing subunit, a second storage, and a second transmitting subunit; the second storage has stored therein at least one computer program which, when executed by the second receiving subunit, the at least one second processing subunit, and the second transmitting subunit, causes the second receiving subunit, the at least one second processing subunit, and the second transmitting subunit to implement the information transmission method described in the second aspect.

In a fifth aspect, the present disclosure provides a computer readable storage medium having stored therein a computer program which, when executed by a processor, causes the processor to implement the information transmission method described in the first aspect or the second aspect.

### BRIEF DESCRIPTION OF DRAWINGS

FIG. 1 is a schematic diagram illustrating an application scenario in the related technology.
FIG. 2 is a flowchart illustrating an information transmission method performed by an IP device according to the present disclosure.
FIG. 3 is a flowchart illustrating an information transmission method performed by an OTN device according to the present disclosure.
FIG. 4 is a schematic structural diagram of an IP device according to the present disclosure.
FIG. 5 is a schematic structural diagram of an OTN device according to the present disclosure.
FIG. 6 is a schematic structural diagram of a computer readable medium according to the present disclosure.
FIG. 7 is a schematic structural diagram of an OTN device and an IP device according to the present disclosure.
FIG. 8 is a schematic structural diagram of a wavelength division multiplexer/demultiplexer module in an OTN device and a colored optical module in an IP device according to the present disclosure.

### DETAIL DESCRIPTION OF EMBODIMENTS

In order to enable those of ordinary skill in the art to better understand the technical solutions of the present disclosure, an information transmission method, an IP device, an OTN device, and a computer readable storage medium provided in the present disclosure are described in detail below with reference to the drawings.

Exemplary embodiments will be described more fully below with reference to the drawings, but the exemplary embodiments described herein may be implemented in different forms, and the present disclosure should not be interpreted as being limited to the implementations described herein. The implementations are provided to make the present disclosure thorough and complete, and may enable those of ordinary skill in the art to fully understand the scope of the present disclosure.

The embodiments/implementations described herein and the features therein can be combined with one another if no conflict is incurred.

The term "and/or" used herein includes any and all combinations of one or more associated listed items.

The terms used herein are merely used to describe exemplary implementations, and are not intended to limit the present disclosure. As used herein, "a" and "the" which indicate a singular form are intended to include a plural form, unless expressly stated otherwise in the context. It should be further understood that the term "include/comprise" and/or the term "be made of" used herein indicates the presence of the features, integers, operations, elements and/or components listed following the term, but does not exclude the presence or addition of one or more other features, integers, operations, elements, components and/or combinations thereof.

Unless otherwise defined, all terms (including technical terms and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

In the present disclosure, unless otherwise specified, the following technical terms should be understood based on the following explanations.

An OTN device refers to an optical transport network device including at least one of an Optical channel Data Unit k (ODUk), an Optical channel Data Unit Flex (ODUflex), a sub-wavelength Optical Channel (OCH), or a unit having a wavelength-level switching capability.

An optical layer in the OTN device is available for modulation and demodulation of optical signals, and an electrical layer in the OTN device is available for conversion between optical signals and electrical signals.

An IP device is a device with an IP communication function, such as a router or a switch, and can be connected to the OTN device and interact with the OTN device through optical signals.

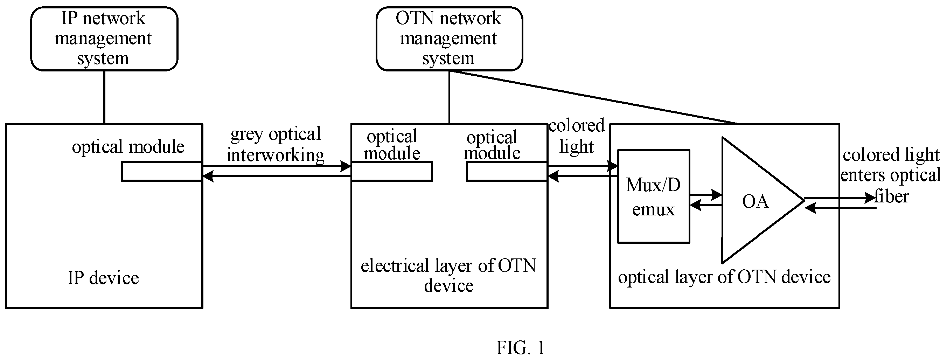

FIG. 1 is a schematic diagram illustrating an application scenario in the related technology. Referring to FIG. 1, in some related technologies, an electrical layer of an IP device and an electrical layer of an OTN device transmit service signals therebetween by means of grey optical interworking. The IP device and the OTN device manage and configure service information related to interconnection ports through their respective network management modules. The electrical layer of the OTN device processes a grey optical signal transmitted from the IP device, and then generates a colored optical signal through Forward Error Correction (FEC) of the electrical layer, and the colored optical signal sequentially passes through a wavelength division multiplexer/demultiplexer and an Optical Amplifier (OA) in an optical layer, and enters an optical fiber to be transmitted, so as to increase a transmission distance and a single-fiber transmission bandwidth. The information such as transmission code pattern, FEC, wavelength, optical power, and spectral width of a colored optical module for generating the colored optical signal can be directly acquired and configured from the electrical layer. However, since such method of transmitting the service signals relies on the electrical layer of the OTN device, FEC is to be added to the electrical layer of the OTN device, resulting in a relatively high network construction cost.

In some related technologies, a colored optical module is directly loaded into the IP device, and an optical layer of the IP device and the optical layer of the OTN device transmit the service signals therebetween by means of colored optical interworking, which enables to omit the electrical layer of the OTN device to reduce the network construction cost; but a coordination cannot be achieved between the IP device and the OTN device, such that, although the service signals can be transmitted between the IP device and the OTN device, the OTN device cannot acquire and configure the information such as the transmission code pattern, the FEC, the wavelength, the optical power, and the spectral width of the colored optical module in a coordination with the IP device.

Therefore, it is urgent to provide a scheme capable of achieving the coordination between the IP device and the OTN device at a relatively low cost and reducing the difficulty of implementation. The present disclosure proposes directly receiving OAM information of the IP device by the optical layer of the OTN device and directly sending a control command to the IP device by the optical layer of the OTN device to achieve the coordination between the OTN device and the IP device.

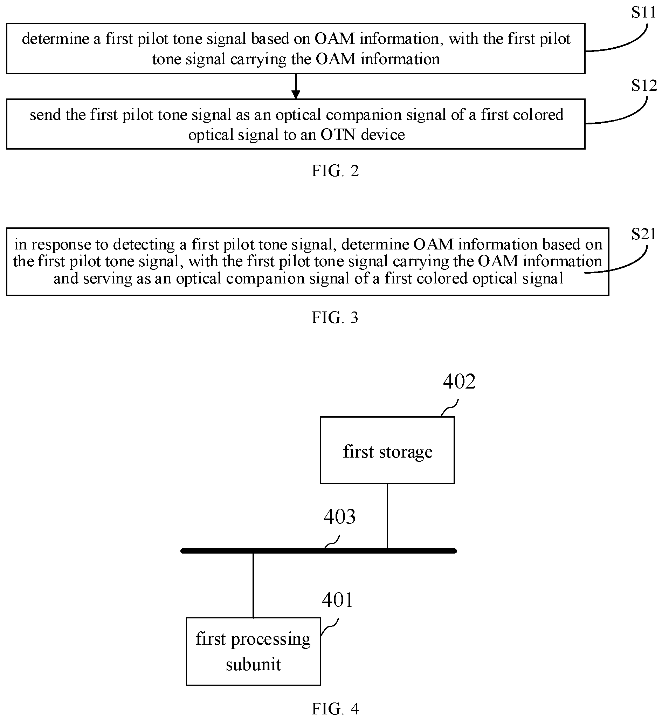

FIG. 2 is a flowchart illustrating an information transmission method for an IP device according to the present disclosure. In a first aspect, referring to FIG. 2, the present disclosure provides the information transmission method for an IP device, the IP device includes a colored optical module, and the method includes following operations S11 and S12.

At S11, determining a first pilot tone signal based on OAM information, with the first pilot tone signal carrying the OAM information.

At S12, sending the first pilot tone signal, as an optical companion signal of a first colored optical signal, to an OTN device.

In the implementation, the colored optical module is disposed in the IP device, and the first pilot tone signal carrying the OAM information, as the optical companion signal of the first colored optical signal, is sent by the IP device to an optical layer of the OTN device, so that the OAM information can be directly transmitted to the optical layer of the OTN device without a participation of an electrical layer of the OTN device or without adding an upper network management system, thereby achieving coordination between the OTN device and the IP device, and reducing network construction cost.

In some implementations, operation S11 includes: modulating the OAM information to obtain the first pilot tone signal.

In some implementations, the colored optical module is provided therein with a coherent Digital Signal Processor (DSP) chip or a Silicon Photonics Variable Optical Attenuator (SiP VOA)/Indium Phosphide Semiconductor Optical Amplifier (InP SOA) optical chip. The IP device may modulate the OAM information with the coherent DSP chip or the SiP VOA/InP SOA optical chip to obtain the first pilot tone signal.

It should be noted that since the colored optical module of the IP device is not provided with an additional communication transmission channel for exchanging other information in addition to being configured to perform colored optical interworking with the OTN device, the first pilot tone signal carrying the OAM information, as the optical companion signal of the first colored optical signal, is transmitted to the OTN device, that is, the first colored optical signal is subjected to pilot tone to generate a low-speed optical companion signal (i.e., the first pilot tone signal) for a main signal (i.e., the first colored optical signal) in a wavelength channel at a transmitting end by means of frequency modulation or amplitude modulation, and the first pilot tone signal does not occupy a service channel of the first colored optical signal.

In some implementations, the OAM information includes at least one of transmission code pattern, FEC, wavelength, optical power, or spectral width.

In the implementations of the present disclosure, the OAM information is not fixed, and may be adjusted based on actual situations.

In some implementations, the colored optical module of the IP device includes a first optical-layer OAM protocol agent unit configured to read the OAM information.

In some implementations, the information transmission method further includes: in response to detecting a second pilot tone signal, determining a control command based on the second pilot tone signal, with the second pilot tone signal carrying the control command, and serving as an optical companion signal of a second colored optical signal.

In the present disclosure, since the colored optical module of the IP device is not provided with an additional communication transmission channel for exchanging other information in addition to being configured to perform colored optical interworking with the OTN device, in response to the OTN device sending the control command to the colored optical module of the IP device, the second pilot tone signal carrying the control command, as the optical companion signal of the second colored optical signal, is transmitted to the colored optical module of the IP device, and the second pilot tone signal does not occupy a service channel of the second colored optical signal, thereby realizing a remote control on the IP device by the OTN device. In some implementations, the control command includes at least one of module configuration information, transmission performance alarm information, or a module reset instruction.

In some implementations, the IP device may demodulate the second pilot tone signal with the coherent DSP chip or the SiP VOA/InP SOA optical chip to obtain the control command. Accordingly, the first optical-layer OAM protocol agent unit of the colored optical module of the IP device may perform protocol conversion on the control command, so that an IP network management system can obtain the control command of the OTN device.

In some implementations, the IP device obtains the second pilot tone signal by detecting with a photoelectric detection device. The photoelectric detection device is not particularly limited in the present disclosure, and may be a sensor, a laser detector, or the like.

In addition, since the IP device and the OTN device interact with each other by means of colored optical interworking, the second pilot tone signal detected by the IP device is an optical signal, and the colored optical module of the IP device further includes an optical-electrical conversion function module configured to convert the detected optical signal (i.e., the second pilot tone signal) into an electrical signal.

In the present disclosure, the IP device sends the first pilot tone signal carrying the OAM information, as the optical companion signal of the first colored optical signal, to the optical layer of the OTN device, the OTN device sends the second pilot tone signal carrying the control command, as the optical companion signal of the second colored optical signal, to the colored optical module of the IP device, the OAM information can be directly transmitted to the optical layer of the OTN device without passing through the electrical layer of the OTN device, and no additional upper network management system is to be provided, which not only achieves the coordination between the IP device and the OTN device, but also reduces the network construction cost.

FIG. 3 is a flowchart illustrating an information transmission method performed by an OTN device according to the present disclosure. In a second aspect, referring to FIG. 3, the present disclosure provides the information transmission method performed by an OTN device, including operation S21.

At S21, in response to detecting a first pilot tone signal, determining OAM information based on the first pilot tone signal, with the first pilot tone signal carrying the OAM information, and serving as an optical companion signal of a first colored optical signal.

In some implementations, determining the OAM information based on the first pilot tone signal at operation S21 includes: demodulating the first pilot tone signal to obtain the OAM information.

In the present disclosure, an optical layer of the OTN device may obtain the first pilot tone signal by detecting with a photoelectric detection device, and then demodulate the detected first pilot tone signal to obtain the OAM information sent along with the first pilot tone signal. In some implementations, the optical layer of the OTN device further includes a second optical-layer OAM protocol agent unit configured to perform protocol conversion on the OAM information. The second optical-layer OAM protocol agent unit converts the OAM information obtained by demodulating and then uploads the OAM information to an OTN network management system, so as to enable operation and maintenance personnel to acquire the OAM information by querying the OTN network management system. Furthermore, a wavelength port, filter bandwidth, gain, or attenuation of a wavelength division multiplexer/demultiplexer of the optical layer of the OTN device may be configured based on the OAM information.

The photoelectric detection device is not paticularly limited in the present disclosure, and may be a sensor, a laser detector, or the like. It should be noted that, during the first pilot tone signal being sent from the IP device to the OTN device along with a transmission of the first colored optical signal, in response to the OTN device detecting the first pilot tone signal, the transmission of the first colored optical signal and the first pilot tone signal is not affected, that is, the first pilot tone signal continues to be transmitted along with the first colored optical signal in the OTN device.

In addition, since the IP device and the OTN device interact with each other by means of colored optical interworking, the first pilot tone signal detected by the OTN device is an optical signal; accordingly, the optical layer of the OTN device further includes an optical-electrical conversion function module configured to convert the detected optical signal (i.e., the first pilot tone signal) into an electrical signal.

In some implementations, the information transmission method further includes: determining a second pilot tone signal based on a control command, with the second pilot tone signal carrying the control command; sending the second pilot tone signal, as an optical companion signal of a second colored optical signal, to the IP device.

In the present disclosure, the second pilot tone signal carrying the control command, as the optical companion signal of the second colored optical signal, is sent by the optical layer of the OTN device to the IP device, so that the control command can be directly transmitted to an optical layer of the IP device without a participation of an electrical layer of the OTN device or without adding an upper network management system, thereby achieving coordination between the OTN device and the IP device, and reducing network construction cost.

In some implementations, the control command is acquired from the upper OTN network management system of the OTN device. The OTN network management system sends at least one of module configuration information, transmission performance alarm information, or a module reset instruction to the second optical-layer OAM protocol agent unit, to acquire the control command.

In some implementations, the second colored optical signal is a service signal or a basic optical signal transmitted by the OTN device to the IP device; in response to the second colored optical signal being the basic optical signal, before sending the second pilot tone signal as the optical companion signal of the second colored optical signal to the IP device, the information transmission method further includes: adjusting an optical power of a DC (direct current) optical signal by a variable optical attenuator to obtain the basic optical signal.

In the present disclosure, an optical signal serves as a basis for an optical layer of the OTN device transmitting the second pilot tone signal to the IP device; therefore, in response to the OTN device having a service signal to be transmitted to the IP device, the service signal is subjected to pilot tone, so that the second pilot tone signal as the optical companion signal of the service signal is to be sent to the IP device. In response to the OTN device not having the service signal to be transmitted to the IP device, the OTN device may generate the basic optical signal, so that the second pilot tone signal as the optical companion signal of the basic optical signal is sent to the IP device. The DC optical signal is obtained by processing out-of-band DC light through a 1×N power divider, but the present disclosure is not limited thereto.

A method for generating the basic optical signal is not particularly limited in the present disclosure. As an example, the out-of-band DC light is divided into multiple optical signals by the 1×N power divider, and then processed by a filter to generate the basic optical signal.

In some implementations, the optical layer of the OTN device performs pilot tone on the basic optical signal by making the second pilot tone signal as the optical companion signal of the basic optical signal through at least one of an Electrically Variable Optical Attenuator (eVOA) or a Semiconductor Optical Amplifier (SOA).

In the present disclosure, the optical layer of the OTN device detects the optical companion signal (i.e., the first pilot tone signal carrying the OAM information) of the first colored optical signal, and, in response to the optical layer of the OTN device sending the control command to the IP device, the OTN device sends the second pilot tone signal carrying the control command, as the optical companion signal of the second colored optical signal, to a colored optical module of the IP device, thereby achieving the coordination between the IP device and the OTN device. Furthermore, the OAM information can be directly transmitted to the optical layer of the OTN device without a participation of an electrical layer of the OTN device or without adding an upper network management system, which reduces the network construction cost.

In a third aspect, referring to FIG. 4, the present disclosure provides an IP device, including a colored optical module including a laser unit and a first coordination unit; the laser unit includes a first transmitting subunit; the first coordination unit includes at least one first processing subunit 401, a first storage 402, and a first receiving subunit; the first storage 402 has stored therein at least one computer program which, when executed by the at least one first processing subunit 401, the first transmitting subunit, and the first receiving subunit, causes the at least one first processing subunit 401, the first transmitting subunit, and the first receiving subunit to implement the information transmission method described above.

In some implementations, the IP device further includes at least one first input/output (I/O) interface 403 connected between the first processing subunit 401 and the first storage 402 and configured to enable information interaction between the first processor 401 and the first storage 402.

The first processing subunit 401 is a device having a data processing capability, and includes, but is not limited to, a Central Processing Unit (CPU); the first storage 402 is a device having a data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the first I/O interface (read/write interface) 403 is connected between the first processing subunit 401 and the first storage 402, is capable of enabling the information interaction between the first processing subunit 401 and the first storage 402, and includes, but is not limited to, a data bus (Bus).

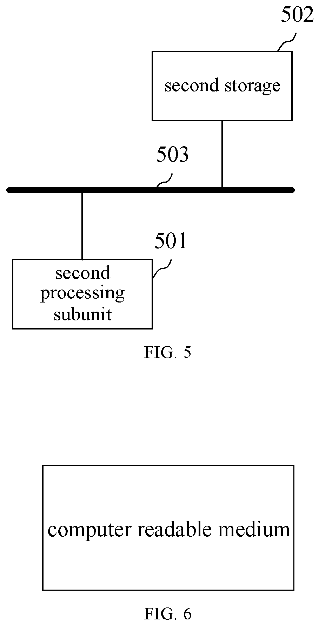

In a fourth aspect, referring to FIG. 5, the present disclosure provides an OTN device, including a wavelength division multiplexer/demultiplexer module including a colored light detection unit and a second coordination unit; the colored light detection unit includes a second receiving subunit; the second coordination unit includes at least one second processing subunit 501, a second storage 502, and a second transmitting subunit; the second storage 502 has stored therein at least one computer program which, when executed by the second receiving subunit, the at least one second processing subunit 501, and the second transmitting subunit, causes the second receiving subunit, the at least one second processing subunit 501, and the second transmitting subunit to implement the information transmission method described above.

In some implementations, the OTN device further includes at least one second I/O interface 503 connected between the second processing subunit 501 and the second storage 502 and configured to enable information interaction between the second processing subunit 501 and the second storage 502.

The second processing subunit 501 is a device having a data processing capability, and includes, but is not limited to, a CPU; the second storage 502 is a device having a data storage capability, and includes, but is not limited to, an RAM (more specifically, an SDRAM, a DDR SDRAM, etc.), an ROM, an EEPROM, and a FLASH; and the second I/O interface (read/write interface) 503 is connected between the second processing subunit 501 and the second storage 502, is capable of enabling the information interaction between the second processing subunit 501 and the second storage 502, and includes, but is not limited to, a data bus (Bus).

In a fifth aspect, referring to FIG. 6, the present disclosure provides a computer readable storage medium having stored therein a computer program which, when executed by a processor, causes the processor to implement the information transmission method described above.

In order to enable those of ordinary skill in the art to understand the technical solutions provided by the present disclosure more clearly, the technical solutions provided by the present disclosure are illustrated in detail below by particular implementations.

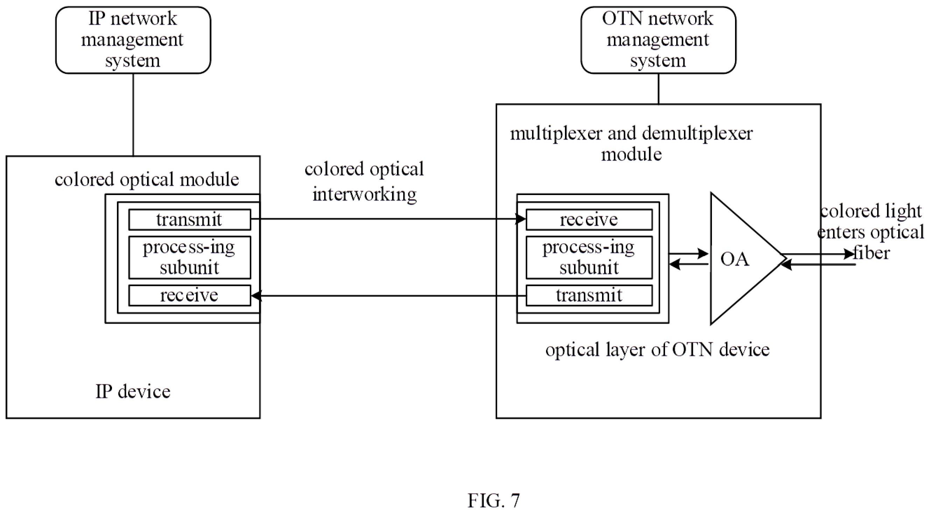

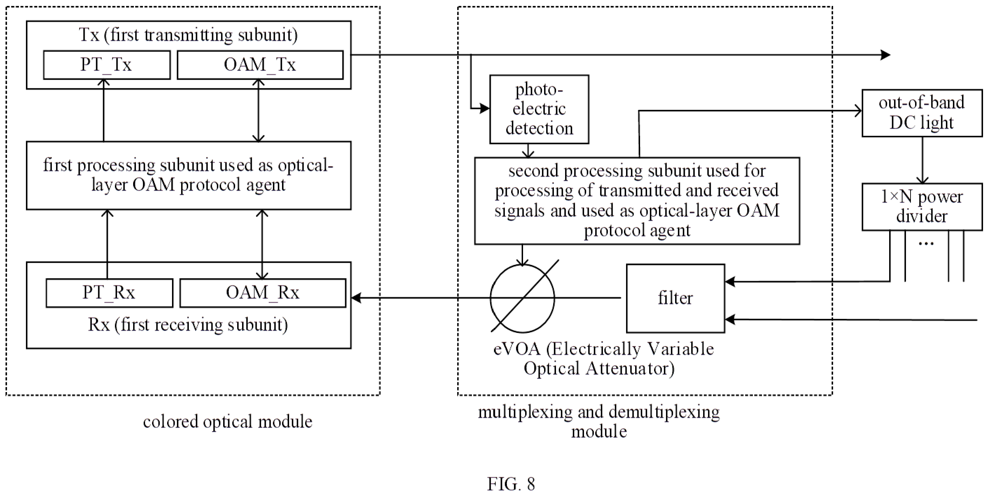

FIG. 7 is a schematic structural diagram of an OTN device and an IP device according to the present disclosure. FIG. 8 is a schematic structural diagram of a wavelength division multiplexer/demultiplexer module in an OTN device and a colored optical module in an IP device according to the present disclosure. Referring to FIG. 7 and FIG. 8, as an example, the colored optical module of the IP device includes a first sub-assembly formed by the laser unit and the first coordination unit, the laser unit includes the first transmitting subunit (Tx), and the first coordination unit includes the first receiving subunit (Rx) and the first processing subunit. The first sub-assembly may send the OAM information to the OTN device through interaction with the OTN device, and may further issue management and control information (e.g., the control command) to be executed to the colored optical module and upload information (e.g., feedback information of the control command) to be fed back to the OTN device, thereby realizing a remote management on the IP device by the OTN device.

The optical layer of the OTN device includes a second sub-assembly formed by the colored light detection unit and the second coordination unit, the colored light detection unit includes the second receiving subunit for photoelectric detection, and the second coordination unit includes the second processing subunit. The second sub-assembly may send the management and control information (e.g., the control command) of the OTN device to the first sub-assembly of the IP device, and may also receive the OAM information sent by the first sub-assembly of the IP device and feed the OAM information to the OTN network management system.

An interaction process of receiving and transmitting the OAM information between the colored optical module of the IP device and the optical layer of the OTN device through the first sub-assembly and the second sub-assembly is as follows: the first transmitting subunit of the first sub-assembly loads the first pilot tone signal onto the first colored optical signal through the coherent DSP chip or the SiP VOA/InP SOA optical chip. The first pilot tone signal is obtained by modulating the OAM information, and carries a fixed relevant identification of the first colored optical signal and burst rewritable OAM information.

The second receiving subunit of the second sub-assembly performs photoelectric detection, and in response to detecting the first pilot tone signal, demodulates the first pilot tone signal to obtain the OAM information and feed the OAM information back to the upper OTN network management system of the OTN device.

An interaction process of receiving and transmitting the control command between the colored optical module of the IP device and the optical layer of the OTN device through the first sub-assembly and the second sub-assembly is as follows: the second coordination unit of the second sub-assembly further includes the second transmitting subunit, the second processing subunit loads the second pilot tone signal onto the second colored optical signal through a fast VOA or the SOA, and the second pilot tone signal, as the optical companion signal of the second colored optical signal, is sent by the second transmitting subunit to the colored optical module of the IP device. In the presence of the service signal, the service signal may be used as the second colored optical signal along which the second pilot tone signal is transmitted; in the absence of the service signal, the basic optical signal may be generated from the out-of-band DC light of the OTN device, and may be used as the second colored optical signal along which the second pilot tone signal is transmitted, thereby realizing signaling interaction. The basic optical signal is generated by processing the out-of-band DC light through the 1×N power divider.

The first coordination unit of the first sub-assembly further includes the first receiving subunit (Rx) which performs photoelectric detection on the light split from a main optical path before a Current-Feedback Optical Integrated Circuit (ICR), and in response to detecting the second pilot tone signal, demodulates the second pilot tone signal by the coherent DSP chip or the SiP VOA/InP SOA optical chip to obtain the control command. After demodulating to obtain the control command, the first processing subunit of the first sub-assembly may serve as an optical-layer OAM protocol agent, to execute the control command issued by the OTN device, thereby achieving the interaction between the colored optical module and the OTN device. The control command may be a basic operation including configuration, query, or reset, or may be an active operation including module attribute support, performance alarm, or closed-loop optimization.

It should be noted that, by adding the sub-assembly (e.g., the first sub-assembly, the second sub-assembly) to each of the colored optical module and the wavelength division multiplexer/demultiplexer module of the OTN device and loading the pilot tone signal (e.g., the first pilot tone signal, the second pilot tone signal) on the colored optical signal (e.g., the first colored optical signal, the second colored optical signal) transmitted between the IP device and the OTN device, a remote management on the colored optical module of the IP device by the OTN device is realized, the coordination between the IP device and the OTN device is further realized, all management and control can be executed by the upper OTN network management system of the OTN device, and the difficulty in cooperative processing between multiple network management systems is effectively reduced.

It should be understood by those of ordinary skill in the art that the functional modules/units in all or some of the operations and the devices in the method disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules or other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carriers or other transmission mechanisms, and may include any information delivery medium.

The present disclosure discloses the exemplary implementations using specific terms, but the terms are merely used and should be merely interpreted as having general illustrative meanings, rather than for the purpose of limitation. Unless expressly stated otherwise, it is apparent to those of ordinary skill in the art that the features, characteristics and/or elements described in connection with a particular implementation can be used alone or in combination with the features, characteristics and/or elements described in connection with other implementations. Therefore, it should be understood by those of ordinary skill in the art that various changes in forms and details can be made without departing from the scope of the present disclosure as defined by the appended claims.

## Claims

1. An information transmission method performed by an Internet Protocol, IP, device, the IP device comprising a colored optical module, and the method comprising:
determining a first pilot tone signal based on Operation Administration and Maintenance, OAM, information, the first pilot tone signal carrying the OAM information;
sending the first pilot tone signal, as an optical companion signal of a first colored optical signal, to an Optical Transport Network, OTN, device.

2. The information transmission method of claim 1, wherein the OAM information comprises at least one of transmission code pattern, Forward Error Correction (FEC), wavelength, optical power, or spectral width.

3. The information transmission method of claim 1, further comprising:
in response to detecting a second pilot tone signal, determining a control command based on the second pilot tone signal, the second pilot tone signal carrying the control command and serving as an optical companion signal of a second colored optical signal.

4. The information transmission method of claim 3, wherein the control command comprises at least one of module configuration information, transmission performance alarm information, or a module reset instruction.

5. An information transmission method performed by an OTN device, comprising:
in response to detecting a first pilot tone signal, determining OAM information based on the first pilot tone signal, the first pilot tone signal carrying the OAM information and serving as an optical companion signal of a first colored optical signal.

6. The information transmission method of claim 5, further comprising:
determining a second pilot tone signal based on a control command, the second pilot tone signal carrying the control command;
sending the second pilot tone signal, as an optical companion signal of a second colored optical signal, to an IP device.

7. The information transmission method of claim 6, wherein the second colored optical signal is a service signal or a basic optical signal transmitted by the OTN device to the IP device;
the method further comprises: in response to the second colored optical signal being the basic optical signal, before sending the second pilot tone signal as the optical companion signal of the second colored optical signal to the IP device, adjusting optical power of a direct current, DC, optical signal by a variable optical attenuator to obtain the basic optical signal.

8. An Internet Protocol, IP, device, comprising:
a colored optical module comprising a laser unit and a first coordination unit,
the laser unit comprising a first transmitting subunit,
the first coordination unit comprising at least one first processing subunit, a first storage, and a first receiving subunit,
wherein the first storage has stored therein at least one computer program which, when executed by the first transmitting subunit, the at least one first processing subunit, and the first receiving subunit, causes the first transmitting subunit, the at least one first processing subunit, and the first receiving subunit to implement the information transmission method of any one of claims 1 to 4.

9. An Optical Transport Network, OTN, device, comprising:
a wavelength division multiplexer/demultiplexer module comprising a colored light detection unit and a second coordination unit,
the colored light detection unit comprising a second receiving subunit,
the second coordination unit comprising at least one second processing subunit, a second storage, and a second transmitting subunit,
wherein the second storage has stored therein at least one computer program which, when executed by the second receiving subunit, the at least one second processing subunit, and the second transmitting subunit, causes the second receiving subunit, the at least one second processing subunit, and the second transmitting subunit to implement the information transmission method of any one of claims 5 to 7.

10. A computer readable storage medium having stored therein a computer program which, when executed by a processor, causes the processor to implement the information transmission method of any one of claims 1 to 7.
